# EUROPEAN PATENT APPLICATION

(11) **EP 4 461 952 A1**
(43) Date of publication of application: **13.11.2024**
(21) Application number: 23382449.9
(22) Date of filing: 12.05.2023
(51) Int. Cl.: F03D 1/06

(54) **SPAR CAP, WIND TURBINE BLADE AS WELL AS METHOD OF MANUFACTURING A SPAR CAP**

(71) Applicant: Siemens Gamesa Renewable Energy Innovation & Technology S.L., 31621 Sarriguren (Navarra) (ES)
(72) Inventor: Yuste Soler, Javier, 31600 Burlada (ES)
(74) Representative: SGRE-Association

(57) **Abstract**

The invention relates to a spar cap (1), a wind turbine blade (200) and a method of manufacturing a spar cap (1) for a wind turbine blade (200). The spar cap (1) comprises a plurality of plate-shaped pultruded main bodies (21, 22, 23, 24) which are arranged one above the other in a stacking direction (SD) to form a main body stack (10). Furthermore, the spar cap (1) comprises at a first end face (11) of the main body stack (10) a first main body end (21a) of a first main body (21) of the plurality of main bodies (21, 22, 23, 24) which is arranged offset in the longitudinal direction (LD) of the spar cap (1) relative to a first main body end (22a) of a second main body (22) of the plurality of main bodies (21, 22, 23, 24) on an upper side of the second main body (22) in such a manner that a transition portion is formed by the second main body (22) between the first main body end (21a) of the first main body (21) and the first main body end (22a) of the second main body (22), wherein the second main body (22) is arranged adjacent to the first main body (21). In addition, the spar cap comprises at least a first stiffening body (31, 32), wherein the at least one first stiffening body (31, 32) is arranged at least at the first main body end (21a) of the first main body (21) and at least partially at an upper side (22c) of the second main body (22) in the transition portion formed by the second main body (22) for at least partially carrying longitudinal loads running at least in the longitudinal direction (LD) of the spar cap (1) and transmitting the longitudinal loads to the main body stack (10) .

## Description

The invention relates to a spar cap, a wind turbine blade, as well as a method of manufacturing a spar cap of a wind turbine blade.

Large wind turbine blades may be manufactured by using stacked pultruded planks in the spar, especially in the main spar. Every time a plank is ended, a big axial stiffness step is generated, implying a sudden axial strain increase. To ensure a safe blade design, it is common practice to extend the planks until the axial strain of the spar cap decreases to a point where, the sudden increase in strain at the end of the plank is at an allowable level. Disadvantageously, this generates a non-optimum design in terms of the amount of material as pultruded planks are extended just to counteract the effect of ending the planks. The blade design is then structurally safe, but the blade is more expensive.

It is an object of the present invention to, at least partially, overcome the above-described disadvantages. Another object of the present invention is to provide a more cost-effective and durable spar cap that is also easier to manufacture. A further object of the present invention is to provide a more cost-effective and durable wind turbine blade and to facilitate the manufacture thereof. Furthermore, it is an object of the present invention to improve the method of manufacture of a spar cap for a wind turbine blade.

The above objects are achieved by a spar cap according to claim 1, a wind turbine blade according to claim 11 and a method of manufacturing according to claim 12. Further embodiments of the invention are subject of the dependent claims. Features and details described in connection with the spar cap according to the invention naturally also apply in connection with the wind turbine blade according to the invention and/or the method of manufacturing according to the invention and vice versa in each case, so that mutual reference is or can always be made with respect to the disclosure of the individual aspects of the invention.

According to a first aspect, the present invention discloses a spar cap for a spar of a wind turbine blade. The spar cap comprises a plurality of plate-shaped pultruded main bodies, wherein the main bodies are arranged one above the other in a stacking direction to form a main body stack in order to at least partially carrying longitudinal loads running at least in a longitudinal direction of the spar cap. Furthermore, at a first end face of the main body stack at least a first main body end of a first main body of the plurality of main bodies is arranged offset in the longitudinal direction of the spar cap relative to a first main body end of a second main body of the plurality of main bodies arranged adjacent to the first main body in such a manner that a transition portion is formed by the second main body between the first main body end of the first main body and the first main body end of the second main body. Furthermore, the spar cap comprises at least a first stiffening body or several stiffening bodies, wherein the at least one first stiffening body is arranged at least at the first main body end of the first main body and at least partially at an upper side of the second main body in the transition portion formed by the second main body for at least partially carrying longitudinal loads running at least in the longitudinal direction of the spar cap and transmitting the longitudinal loads to the main body stack.

In particular, the spar cap is a spar cap for any kind of spar of a wind turbine blade. In particular, the spar cap may be a spar cap for a main spar of a wind turbine blade. It is also conceivable that the spar cap is a trailing-edge or rear spar cap for a trailing-edge or rear spar of a wind turbine blade.

In particular, the plate-shaped pultruded main bodies are carbon planks with constant cross section, wherein especially the cross section has a rectangular shape. For example, a main body can have a thickness of 2 - 10 mm, in particular 3 - 7 mm, preferably 5 mm, and/or a main body can have a width of 100 - 500 mm, in particular 150 - 250 mm, preferably 200 mm.

It is also conceivable that a main body has several partial bodies, e.g., two carbon planks, running side by side to form the main body. The partial bodies can be joined to each other by material bonding.

In particular, a respective main body of the plurality of main bodies each has an upper side as a plank side and a bottom side opposite the upper side as a further plank side. The upper side faces up or towards the top of the stack when at least two main bodies are being stacked, i.e. arranged one above the other in a stacking direction to form a main body stack, and the bottom side faces down or towards the bottom of the stack when at least two main bodies are being stacked, i.e. arranged one above the other in a stacking direction to form the main body stack.

In particular, a first main body end of a respective main body of the plurality of main bodies may be tapered and/or a second main body end of a respective main body of the plurality of main bodies may be tapered. Thus, a stiffening body can be arranged particularly advantageously at a first main body end of a main body and/or a stiffening body can be arranged particularly advantageously at a second main body end of a main body. Due to the tapering of the main body ends, a sudden axial strain increase at the end of the respective main body may be avoided or at least reduced. The tapering angle or slope of the tapered end of the main body end is selected such that a smoother transition is obtained, in other words that a step or jump of the axial strain is reduced.

It is also conceivable that, at a first end face of the main body stack, in several cases or in each case a stiffening body for at least partially carrying longitudinal loads running in the longitudinal direction of the spar cap is arranged at a first main body end of a main body of several or each of two adjacent main bodies and at least partially at an upper side of each of the further main body of the two main bodies in a transition portion formed by the further main body of the two main bodies. Thus, the length of a respective main body may be kept particularly short and the spar cap is particularly cost-effective.

It is also conceivable that, at a second end face of the main body stack, in several or each case a stiffening body for at least partially carrying longitudinal loads running in the longitudinal direction of the spar cap is arranged at a second main body end of a main body of several or each of two adjacent main bodies and at least partially at an upper side of each of the further main body of the two main bodies in a transition portion formed by the further main body of the two main bodies. Thus, the length of a respective main body may be kept particularly short, and the spar cap is particularly cost-effective.

In particular, the first end face of the main body stack is the end face of the main body stack that faces a tip of a wind turbine blade in an installed state and the second end face of the main body stack is the end face of the main body stack that faces a root of a wind turbine blade in an installed state, or vice versa.

The term "first main body" may refer to any main body of the plurality of main bodies in the main body stack and is in particular not limited to a first main body according to a position, e.g., top or bottom main body, in the stack.

By using the at least one stiffening body or several stiffening bodies, the spar cap and/or the wind turbine blade may become particularly cost-effective since a length of a main body or a respective length of several main bodies of the spar cap (at the first end face and/or the second end face of the main body stack) is kept particularly short and is especially not extended just to counteract the effect of ending a main body (in order to have a safe design). Furthermore, by using the at least one stiffening body or several stiffening bodies, a stiffness or a strain of the spar cap and/or the wind turbine blade may show a more uniform course over the longitudinal direction i.e. a course with less severe fluctuations compared to the prior art. As a result, the spar cap and the wind turbine blade comprising the spar cap are particularly durable.

It may be advantageous if the at least one first stiffening body is arranged on an upper side of the first main body in the region of the first main body end of the first main body. In other words, the at least one first stiffening body may be arranged overlapping on an upper surface of the first main body in the region of the first main body end of the first main body. Thus, a load transfer can take place particularly advantageously. If the first main body end of the first main body is tapered, the at least one first stiffening body may rest at least partially on the tapered surface of the first main body. Thus, a load transfer can take place particularly advantageously.

It may be advantageous if the at least one first stiffening body comprises a plurality of fiber layers laminated with each other, wherein in particular, the fiber layers are arranged on top of each other in the stacking direction of the main body stack. Thus, the stiffening body may be of particularly simple and flexible design. Advantageously, a necessary stiffness or strain can be obtained particularly precisely by the number of fiber layers used and by determining individually the length of each of these fiber layers in longitudinal direction of the spar cap. Also, by choosing a position for each of the fiber layers at a main body end, e.g., partly on the upper side of the main body, a necessary stiffness or strain can be obtained particularly precisely. This will allow for reducing the lengths of the main bodies, e.g., the carbon planks, while adding the exact number of fiber layers that are necessary to comply with the axial strain requirements for the spar cap and/or final wind turbine blade.

The fiber layers may be glass fiber layers and/or carbon fiber layers. The glass fiber layers may have a thickness of 0,5 - 1,5 mm, preferably around 1 mm. The carbon fiber layers may have a thickness of 0,1 - 0,7 mm, preferably around 0,3 mm. In a preferred embodiment the at least one first stiffening body comprises a plurality of fiber layers laminated with each other, wherein glass fiber layers or carbon fiber layers are used. In a more preferred embodiment, solely glass fiber layers are used since glass fiber layers are less expensive than carbon fiber layers. It may be advantageous if at least several fiber layers of the plurality of fiber layers are arranged offset to each other in the longitudinal direction of the spar cap. Thus, identically designed fiber layers can be used and/or a particularly advantageous connection of the at least one first stiffening body to the first main body can be made by overlapping the fiber layers with each other and/or with a main body end of a main body.

In particular, the glass fibers of the glass fiber layers and/or the carbon fibers of the carbon layers are aligned unidirectional or substantially unidirectional. It may be advantageous if the at least one first stiffening body comprises a pultruded fiber body. Thus, manufacturing costs may be particularly low since just one pultruded stiffening body could be arranged instead of multiple fiber layers. Fiber layers may also be understood as fiber plies. The pultruded fiber body as a stiffening body may be a pultruded plate, wherein the pultruded plate comprises preferably glass fibers. In particular, the at least one first stiffening body consists of the pultruded fiber body. Thus, the stiffening body can be particularly simple in design. It is further conceivable that the pultruded fiber body can have a constant thickness and is step-shaped respectively z-like shaped. Furthermore, the pultruded fiber body can be adapted to a tapered first main body end of the first main body.

It may be advantageous if the at least one first stiffening body comprises glass fibers and/or carbon fibers, wherein in particular, the glass fibers and/or the carbon fibers are aligned unidirectional or substantially unidirectional. Thus, the at least one first stiffening body can be particularly durable. The pultruded stiffening body (as previously described) may comprise glass fibers and/or carbon fibers, and the stiffening body comprising a plurality of fiber layers laminated together (as previously described) may also comprise glass fibers and/or carbon fibers. In addition, one and the same stiffening body may comprise both, a pultruded stiffening body and a plurality of fiber layers to be laminated together. The unidirectional alignment of the glass fibers and/or the carbon fibers in an alignment direction allows (mechanical) loads to be carried along the alignment direction in a particularly advantageous manner. In particular, the glass fibers and/or the carbon fibers of the at least one first stiffening body are oriented in a longitudinal direction or substantially in a longitudinal direction of the spar cap.

It may be advantageous if a second stiffening body, in particular a second separately formed stiffening body, is arranged at the first end face of the main body stack at least at a first main body end of a third main body of the plurality of main bodies and at least partially arranged at an upper side of a fourth main body of the plurality of main bodies in a transition portion formed by the fourth main body, in order to carry at least partially longitudinal loads running at least in the longitudinal direction of the spar cap and to transmit them to the main body stack. Thus, the spar cap and/or the wind turbine blade may be particularly cost-effective, since also a length of several main bodies of the spar cap is kept particularly short. Furthermore, by using the several stiffening bodies, a stiffness respectively a strain of the spar cap or the wind turbine blade can have a more uniform course over the longitudinal direction compared to the prior art. Thus, the spar cap and/or the wind turbine blade can be particularly durable. It is conceivable that the two stiffening bodies are of the same design, in particular identical, e.g., if a pultruded stiffening body is used in each case. In this way, the spar cap can be produced particularly easily. However, it is also conceivable that the at least one first stiffening body and the second stiffening body are designed differently, e.g., have a different number of fiber layers. Thus, an individual stiffening body can be used depending on the required stiffness respectively strain. Features and/or details and/or advantages expressed about the at least one first stiffening body and/or the arrangement of the at least one first stiffening body may also be applied to the second stiffening body or its arrangement, and vice versa.

It may be advantageous if the spar cap comprises, at a second end face of the main body stack opposite the first end face of the main body stack, at least one further stiffening body for at least partially carrying longitudinal loads running in the longitudinal direction of the spar cap, wherein the further stiffening body is arranged at a second main body end of a main body of two adjacent main bodies and at least partially at an upper side of the further main body of these two main bodies in a transition portion formed by the further main body of the two main bodies. By using the at least one further stiffening body or several further stiffening bodies, the spar cap and/or the wind turbine blade may be particularly cost-effective, since the length of a main body or a respective length of several main bodies of the spar cap (at the second end face of the main body stack) is kept particularly short. Furthermore, by using the at least one further stiffening body or several further stiffening bodies (at the second end face of the main body stack), a stiffness or a strain of the spar cap or the wind turbine blade may have a more uniform course over the longitudinal direction of the spar cap compared to the prior art. Thus, the spar cap and/or the wind turbine blade are particularly durable. Features and/or details and/or advantages expressed about the at least one first stiffening body and/or the second stiffening body and/or the arrangement of a stiffening body can also be applied to the further stiffening body or its arrangement, and vice versa.

It may be advantageous if the main bodies of the plurality of main bodies are arranged on top of each other in the stacking direction to form a main body stack having a triangle-like cross section in longitudinal direction. Thus, the main body stack and thus the spar cap can be particularly simple in design and/or particularly durable. The triangle-like cross section of the main body stack may be stepped on the two inclined sides that span above the base side of the triangle-like cross section, that means above the bottom or lowest main body of the stack. In other words, the main body stack may be step-like at the first end face of the main body stack and/or step-like at the second end face of the main body stack. The steps may form respective transition portions between first main body ends of two adjacent main bodies of the main body stack.

It may be advantageous if the spar cap is produced as a component, especially as a single or separate component, preferably in a vacuum infusion process. Thus, the spar cap may be placed at a designated or specific location of a shell of a wind turbine blade or at a specific location in a blade mould particularly easily. For example, a stiffening body and/or a plurality of fiber layers of a stiffening body may be arranged at the first main body end of the first main body and at least partially at the upper side of the second main body in a spar cap mold for fabricating the spar cap (to produce the spar cap as a (single) component). Alternatively or in addition, a stiffening body or a plurality of fiber layers of a stiffening body may be arranged at the first main body end of the first main body and at least partially at the upper side of the second main body in a shell mold for fabricating the shell of a wind turbine blade, respectively, in a blade mold for fabricating at least a part of a wind turbine blade, e.g., a wind turbine blade half.

According to a second aspect, the present invention shows a wind turbine blade for a wind turbine, wherein the wind turbine blade comprises at least one spar cap, wherein the spar cap is configured according to the invention, especially according to the first aspect of the invention.

In particular, the wind turbine blade may comprise several spar caps, wherein each of the several spar caps is configured according to the invention, especially according to the first aspect of the invention. For example, the wind turbine blade may comprise at least one main spar, e.g. a single main spar, with at least one spar cap at its pressure side and at least one spar cap at its suction side. Further, a trailing-edge spar with at least one spar cap may be present, wherein each of the at least one spar cap of the main spar and the at least one spar cap of the trailing-edge spar are configured according to the invention. The wind turbine may also comprise at least two separated main spars, wherein each of the two main spars comprises at least one spar cap configured according to the invention, especially according to the first aspect of the invention.

The term "wind turbine blade" can also be understood as "part of a wind turbine blade", e.g. a half shell or a segment of a modular wind turbine blade.

In particular, the main spar is the main load-carrying element, which is preferably placed close to the position of the profile maximum thickness. Furthermore, the main spar may comprise the at least one spar cap configured according to the invention and a second spar cap configured according to the invention, wherein especially the two spar caps are facing each other. A spar cap is responsible for carrying the main longitudinal load. Furthermore, the main spar may comprise a main shear web, which is placed in-between the spar caps being responsible for carrying the main shear load.

In particular, the wind turbine blade may further comprise a trailing-edge spar with at least one spar cap, wherein the spar cap is configured according to the invention. The trailing-edge spar is an element used basically for shell structural stability. It also carries longitudinal and shear loads of the wind turbine blade.

The wind turbine blade according to the second aspect of the invention thus exhibits the same advantages as already described with respect to the spar cap according to the first aspect of the invention.

According to a third aspect, the present invention discloses a method of manufacturing a spar cap for a spar of a wind turbine blade of a wind turbine, wherein especially a spar cap according to the invention is manufactured. The method comprises as a step that a plurality of plate-shaped main bodies, in particular plate-shaped pultruded main bodies, is provided. Furthermore, the method comprises as a step that a plurality of fiber layers is provided or that at least a first stiffening body, e.g. a pultruded stiffening body, is provided. Furthermore, the method comprises as a step that the main bodies are arranged one above the other in a stacking direction to form a main body stack, wherein at least a first main body end of a first main body of the plurality of main bodies is arranged on a first end face of the main body stack offset in a longitudinal direction with respect to a first main body end of a second main body of the plurality of main bodies, wherein the second main body is arranged adjacent to the first main body, in such a way that a transition portion is formed by the second main body between the first main body end of the first main body and the first main body end of the second main body. Furthermore, the method comprises as a step that the plurality of fiber layers is arranged at the first main body end of the first main body and at least partially at an upper side of the second main body in the transition portion formed by the second main body, and laminating at least the arranged plurality of fiber layers to form a stiffening body, to manufacture the spar cap. Alternatively to this laminating of at least the arranged plurality of fiber layers to form a stiffening body, the method may comprise as a step that the at least one first stiffening body is arranged at least at the first main body end of the first main body and at least partially at an upper side of the second main body in the transition portion formed by the second main body to manufacture the spar cap.

The process steps described before and in the following may be carried out, if technically reasonable, individually, together, singly, multiple, temporally parallel and/or successively in any order.

It may be advantageous if the main bodies are arranged in the stacking direction one above the other in a materially bonded manner to form the main body stack and/or that the at least one first stiffening body is arranged in a materially bonded manner to the first main body end of the first main body as well as in a materially bonded manner to the upper side of the second main body in the transition portion formed by the second main body. The material bonded manner arrangement facilitates the manufacturing of the spar cap, and thus, of the wind turbine blade and results in a particularly durable spar cap and a particularly durable wind turbine blade. The material bonded manner arrangement may be manufactured by means of a vacuum infusion process. However, other common methods are also conceivable. The material bonded manner arrangement may also be referred to as materially bonded arrangement.

It may be advantageous if the spar cap is manufactured in a shell mold for manufacturing a part of a wind turbine blade shell or in a blade mold for manufacturing a wind turbine blade respectively. Thus, the spar cap may be manufactured together with a part of a shell of a wind turbine blade or together with a wind turbine blade respectively. For example, the spar cap may be manufactured by directly laminating it in the mold together with layers of the wind turbine shell.

The method according to the third aspect of the invention thus exhibits the same advantages as those that have already been described with respect to the spar cap according to the first aspect of the invention and/or the wind turbine blade according to the second aspect of the invention.

The invention is described in more detail in the following description, wherein some examples of implementation of the invention are given and shown schematically in the figures. All features and/or advantages arising from the claims, the description or the drawings, including constructional details, spatial arrangements and process steps, may be essential to the invention both individually and in the various combinations. It should be noted that the figures are descriptive only and are not intended to limit the invention in any way.

The figures show schematically:
Fig. 1 a part of a spar cap,
Fig. 2 a part of a spar cap,
Fig. 3 a part of a wind turbine blade,
Fig. 4 a cross-section of a part of a wind turbine blade,
Fig. 5 a plot of main spar axial strain over the length of a wind turbine blade, and
Fig. 6 a manufacturing method.

In the following figures, identical reference signs are used for the same technical features, even from different design examples.

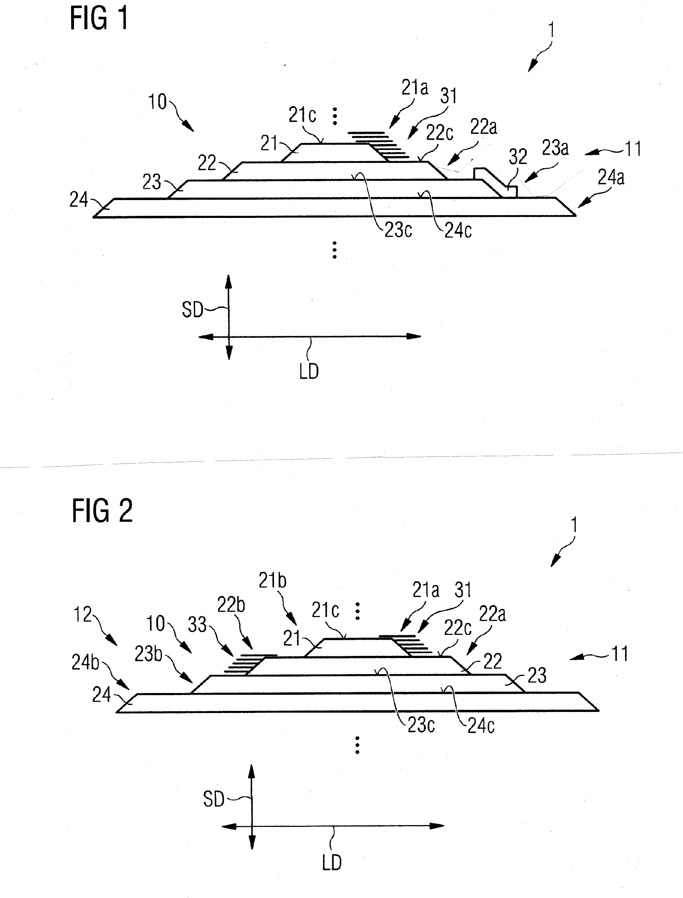

Fig. 1 shows, in a side view, a spar cap 1 for a spar of a wind turbine blade . The spar cap 1 comprises a plurality of plate-shaped pultruded main bodies 21, 22, 23, 24, wherein the main bodies 21, 22, 23, 24 are arranged one above the other in a stacking direction SD to form a main body stack 10 in order to at least partially carrying longitudinal loads running at least in a longitudinal direction LD of the spar cap 1. For example, the length of the main bodies 21, 22, 23, 24 in the longitudinal direction LD decreases in the stacking direction SD, so that the main bodies 21, 22, 23, 24 of the plurality of main bodies 21, 22, 23, 24 are arranged on top of each other in the stacking direction SD to form a main body stack 10 having a triangle-like shape seen in a side view or a triangle-like cross section seen in transversal direction of the spar cap respectively. The main body stack (10) comprises at least a lower main body (22, 23, 24) of the plurality of main bodies (21, 22, 23, 24) and an upper main body (21, 22, 23) of the plurality of main bodies (21, 22, 23, 24), wherein in the longitudinal direction (LD) of the spar cap (1), the lower main body (22, 23, 24) of the spar cap is longer than the upper main body (21, 22, 23).

At a first end face 11 of the main body stack 10 at least a first main body end 21a of a first main body 21 of the plurality of main bodies 21, 22, 23, 24 is arranged offset in the longitudinal direction LD of the spar cap 1 relative to a first main body end 22a of a second main body 22 of the plurality of main bodies 21, 22, 23, 24 in such a manner that a transition portion is formed by the second main body 22 between the first main body end 21a of the first main body 21 and the first main body end 22a of the second main body 22. Here, the second main body 22 is arranged adjacent, in particular directly adjacent, to the first main body 21. Furthermore, at least a first stiffening body 31 is arranged at least at the first main body end 21a of the first main body 21 and at least partially at an upper side 22c of the second main body 22 in the transition portion formed by the second main body 22. Thus, at least partially longitudinal loads running at least in the longitudinal direction LD of the spar cap 1 can be carried and transmitted to the main body stack 10.

It is additionally conceivable for the spar cap 1 shown in fig. 1 that the at least one first stiffening body 31 is arranged on an upper side 21c of the first main body 21 in the region of the first main body end 21a of the first main body 21. In fig. 1, by way of example, the at least one first stiffening body 31 is arranged both, on the upper side 21c of the first main body 21 and on a tapered surface of the first main body end 21a of the first main body 21.

It is additionally conceivable for the spar cap 1 shown in fig. 1 that the at least one first stiffening body 31 comprises a plurality of fiber layers laminated with each other to build the stiffening body 31. In particular, the plurality of fiber layers is arranged on top of each other in the stacking direction SD of the main body stack 10, wherein at least several fiber layers of the plurality of fiber layers are arranged offset to each other in the longitudinal direction LD of the spar cap 1. Furthermore, it is conceivable that the at least one first stiffening body 31 comprises glass fibers and/or carbon fibers, wherein in particular, the glass fibers and/or the carbon fibers are aligned unidirectional or substantially unidirectional.

It is additionally conceivable for the spar cap 1 shown in fig. 1 that the spar cap 1 comprises a second stiffening body 32. The second stiffening body 32 is arranged at the first end face 11 of the main body stack 10 at least at a first main body end 23a of a third main body 23 of the plurality of main bodies 21, 22, 23, 24 and at least partially arranged at an upper side 24c of a fourth main body 24 of the plurality of main bodies 21, 22, 23, 24 in a transition portion formed by the fourth main body 24, in order to carry at least partially longitudinal loads running at least in the longitudinal direction LD of the spar cap 1 and to transmit them to the main body stack 10. The second stiffening body 32 is designed in such a way that it may rest on the first main body end 23a of the third main body 23. Exemplary, the second stiffening body 32 is a pultruded fiber body, e.g., a pultruded glass fiber body. The pultruded fiber body (as the second stiffening body 32) may have a constant thickness and may be step-shaped or z-like shaped respectively or may have a cross section which resembles the pictogram of an escalator. In any case, the shape of the pultruded fiber body is adapted to both, the shape of the main body end 23a of the third main body 23 and to the transition portion formed by the fourth main body 24 it is to be arranged on. Thus, the pultruded fiber body may overlap the main body end 23a to ensure a proper load transfer. The shape of the pultruded fiber body may, at least partly, be adapted to the at least partly tapered first main body end 23a of the third main body 23.

It is additionally conceivable for the spar cap 1 in fig. 1 that the spar cap 1 is produced as a separate component or a single manageable component.

Fig. 2 shows in a side view a spar cap 1 for a spar of a wind turbine blade as already described for fig. 1. This spar cap 1 comprises, at a second end face 12 of the main body stack 10 opposite the first end face 11 of the main body stack 10, additionally at least one further stiffening body 33 for at least partially carrying longitudinal loads running in the longitudinal direction LD of the spar cap 1. The further stiffening body 33 is arranged at a second main body end 22b of a (second) main body 22 of two adjacent main bodies 22, 23 and at least partially at an upper side 23c of the further (i.e. the third) main body 23 of these two main bodies 22, 23 in a transition portion formed by the further (i.e. the third) main body 23 of the two main bodies 22, 23. Additionally, the further stiffening body 33 is arranged on an upper side 22c of the (second) main body 22 in the region of the second main body end 22b of the (second) main body 22.

The at least one further stiffening body 33 may comprise a plurality of fiber layers laminated with each other to build the stiffening body 33. In particular, the plurality of fiber layers may be arranged on top of each other in the stacking direction SD of the main body stack 10, wherein at least several fiber layers of the plurality of fiber layers are arranged offset to each other in the longitudinal direction LD of the spar cap 1. Furthermore, it is conceivable that the at least one first stiffening body 33 comprises glass fibers and/or carbon fibers, wherein in particular, the fibers are aligned unidirectional or substantially unidirectional. As an alternative, the stiffening body 33 may also be designed as a pultruded fiber body 32 (not shown in fig. 2) or may comprise both, a plurality of fiber layers laminated to each other and a pultruded fiber body (not shown in fig. 2).

As show in Fig. 2, the main body ends 21a, 22a, 23a, 24a may be tapered, at least partly, to avoid a sudden axial strain increase at the end of the respective main body 21, 22, 23, 24. The tapering angle or slope of the tapered end of the main body ends 21a, 22a, 23a, 24a is selected such that a smoother transition is obtained, in other words, that a step or jump of the axial strain is reduced.

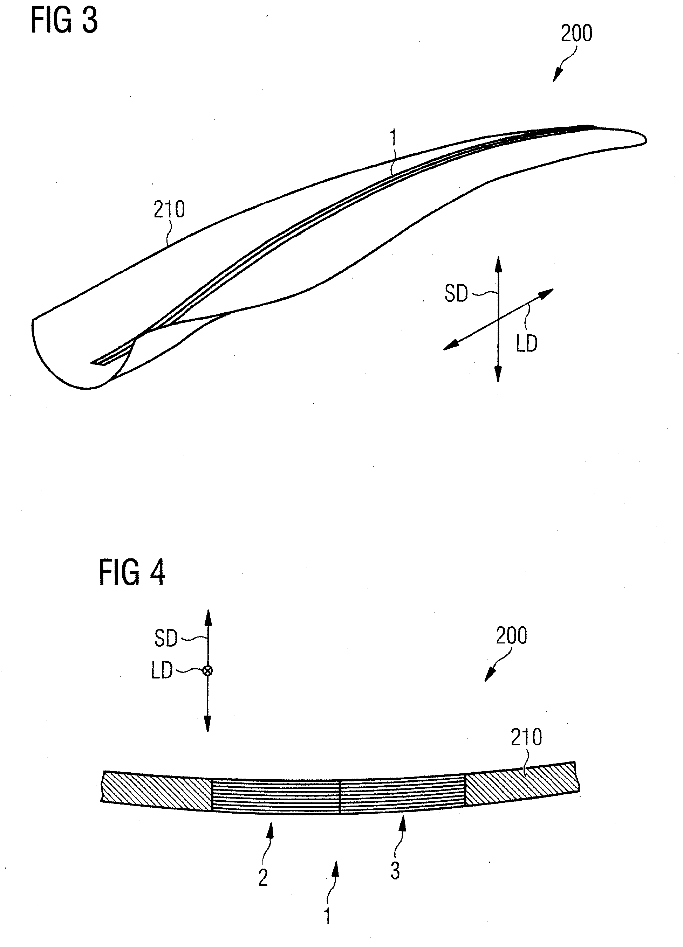

Fig. 3 shows a part of a wind turbine blade 200 comprising a spar cap 1 of a main spar, wherein the spar cap 1 is configured according to the invention, especially as described for fig. 1 and/or fig. 2. In fig. 3, there is only one spar cap 1 of a main spar shown. However, further spar caps may be present, all of them or a part thereof configured according to the invention. The longitudinal direction LD of the spar cap 1 and the longitudinal direction LD of the part of the wind turbine blade 200 coincide or substantially coincide in this case. Main bodies 21, 22, 23, 24 of a plurality of main bodies 21, 22, 23, 24 (not shown in fig. 3) are arranged on top of each other in the stacking direction SD to form a main body stack 10 having a substantially triangle-like cross section seen in transversal direction of the spar cap 1, as shown exemplary in fig. 1 and fig.2. The longest of these main bodies, i.e. main body 24, shown in fig. 2 and fig. 3, is placed at the bottom side of the main body stack 10 and the shortest of these main bodies, i.e. main body 21, shown in fig. 2 and fig. 3, is placed on the upper side of the main body stack 10, wherein the bottom side of the main body stack 10 is facing the shell 210 of the part of the wind turbine blade 200. In other words, the bottom side of the main body stack 10 is facing towards the outside of the blade part 200, or towards the outside of the blade accordingly.

Fig. 4 shows a cross-section of a part of a wind turbine blade 200 as described for fig. 3. In this case, the spar cap 1 is arranged onto or embedded in the shell 210 of the part of the wind turbine blade 200 or of the wind turbine blade, respectively. It is further conceivable that several main bodies or each main body of the plurality of main bodies as shown in fig. 2, is/are composed of several partial bodies e.g., two pultruded carbon plates running side by side in the longitudinal direction LD of the spar cap, to form a respective main body. The partial bodies may be part of two adjacently arranged stacks 2, 3 which may be joined to each other by material bonding.

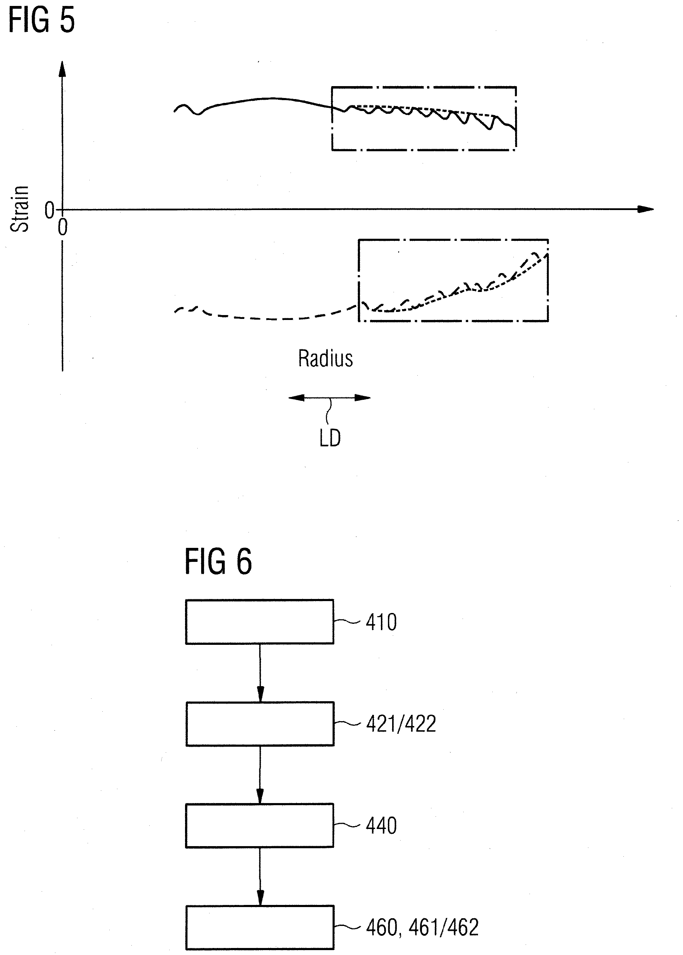

Fig. 5 shows a part of a plot of the axial strain of spar caps, of a pressure side spar cap above and of a suction side spar cap below. The two spar caps are part of a main spar and the axial strain of these spar caps is shown as a function of the length of a wind turbine blade 200. In the two selected areas, each limited by a dash-dot line, the axial strain along the length of a wind turbine blade according to the state of the art is represented by a solid (above) and a dashed line (below), and the axial strain along the length of the wind turbine blade 200 according to the invention is represented by the short dash line (above and below). As can be seen for the state of the art, every time that a main body, for instance a carbon plank, is ended, a big step in stiffness is generated in an outboard region (as well as in an inboard region) of the wind turbine blade 200.

In order to guarantee a predefined minimum strength of the spar cap along its length, the lengths of the main bodies are selected by taking into account the big steps (or big jumps) in stiffness shown by the solid line and the dashed line in fig. 6. The lengths of the main bodies are therefore often oversized according to common practice.

By using several stiffening bodies, a stiffness or strain of the spar cap 1 or of the wind turbine blade 200 respectively will have a more uniform course in the longitudinal direction LD of the spar cap compared to the prior art, avoiding such big steps or jumps in strain and the spar cap 1 as well as the wind turbine blade 200 are very durable. At the same time, by using several stiffening bodies according to the invention, the spar cap 1 and the wind turbine blade 200 become, particularly cost-effective since a length of a main body or a respective length of several main bodies of the spar cap 1 may be kept particularly short and are not extended solely for the purpose of guaranteeing a safe design of the wind turbine blade 200. Thus, a part of the expensive reinforcing material, for instance carbon planks, may be saved.

Fig. 6 shows a flow chart of a method of manufacturing a spar cap 1 for a wind turbine blade 200, wherein the spar cap 1 is manufactured according to the invention, exemplary as described for any of fig. 1 to 5. The method comprises as a step that a plurality of plate-shaped main bodies 21, 22, 23, 24 is provided 410. The main bodies 21, 22, 23, 24 are preferably pultruded plate-shaped main bodies and more preferred, pultruded carbon planks. Furthermore, the method comprises as a step that a plurality of fiber layers is provided 421 or that at least a first stiffening body 31, for instance a pultruded stiffening body, is provided 422. Furthermore, the method comprises as a step that the main bodies 21, 22, 23, 24 are arranged one above the other in a stacking direction SD to form a main body stack 10 440, wherein at least a first main body end 21a of a first main body 21 of the plurality of main bodies 21, 22, 23, 24 is arranged on a first end face 11 of the main body stack 10 offset in a longitudinal direction LD with respect to a first main body end 22a of a second main body 22 of the plurality of main bodies 21, 22, 23, 24 in such a way that a transition portion is formed by the second main body 22 between the first main body end 21a of the first main body 21 and the first main body end 22a of the second main body 22, wherein the second main body 21 is arranged adjacent to the first main body 21, preferably directly adjacent to the first main body 21. Furthermore, the method comprises as a step that the plurality of fiber layers is arranged 460 to the first main body end 21a of the first main body 21 and at least partially at an upper side 22c of the second main body 22 in the transition portion formed by the second main body 22, as well as that at least the arranged plurality of fiber layers is laminated 461 to the stiffening body 31 to manufacture the spar cap 1. Alternatively, the at least one first stiffening body 31, 32 is arranged 462 at least at the first main body end 21a of the first main body 21 and at least partially at an upper side 22c of the second main body 22 in the transition portion formed by the second main body 22 to manufacture the spar cap 1.

It is additionally conceivable for the method that the main bodies 21, 22, 23, 24 are arranged in the stacking direction SD one above the other in a materially bonded manner to form the main body stack 10 and/or that the at least one first stiffening body 31, 32 is arranged in a materially bonded manner at the first main body end 21a of the first main body 21 as well as in a materially bonded manner at the upper side 22c of the second main body 22 in the transition portion formed by the second main body 22. It is additionally conceivable that the spar cap 1 is manufactured in a shell mold or a blade mold for manufacturing a wind turbine shell respectively a wind turbine blade 200.

## Claims

1. Spar cap (1) for a wind turbine blade (200), wherein the spar cap (1) comprises:
- a plurality of plate-shaped pultruded main bodies (21, 22, 23, 24),
wherein the main bodies (21, 22, 23, 24) are arranged one above the other in a stacking direction (SD) to form a main body stack (10) in order to at least partially carrying longitudinal loads running at least in a longitudinal direction (LD) of the spar cap (1), and
wherein at a first end face (11) of the main body stack (10) at least a first main body end (21a) of a first main body (21) of the plurality of main bodies (21, 22, 23, 24) is arranged offset in the longitudinal direction (LD) of the spar cap (1) relative to a first main body end (22a) of a second main body (22) of the plurality of main bodies (21, 22, 23, 24) in such a manner that a transition portion is formed by the second main body (22) between the first main body end (21a) of the first main body (21) and the first main body end (22a) of the second main body (22), wherein the second main body (22) is arranged adjacent to the first main body (21); and
- at least a first stiffening body (31, 32), wherein the at least one first stiffening body (31, 32) is arranged at least at the first main body end (21a) of the first main body (21) and at least partially at an upper side (22c) of the second main body (22) in the transition portion formed by the second main body (22) for at least partially carrying longitudinal loads running at least in the longitudinal direction (LD) of the spar cap (1) and transmitting the longitudinal loads to the main body stack (10).

2. Spar cap (1) according to claim 1,
**characterized in that**,
the at least one first stiffening body (31, 32) is arranged on an upper side (21c) of the first main body (21) in a region of the first main body end (21a) of the first main body (21).

3. Spar cap (1) according to any of the preceding claims,
**characterized in that**,
the at least one first stiffening body (31, 32) comprises a plurality of fiber layers laminated with each other, wherein in particular the plurality of fiber layers are arranged on top of each other in the stacking direction (SD) of the main body stack (10).

4. Spar cap (1) according to claim 3,
**characterized in that**,
at least several fiber layers of the plurality of fiber layers are arranged offset to each other in the longitudinal direction (LD) of the spar cap (1).

5. Spar cap (1) according to any of the preceding claims,
**characterized in that**,
the at least one first stiffening body (31, 32) comprises a pultruded fiber body.

6. Spar cap (1) according to any of the preceding claims,
**characterized in that**,
the at least one first stiffening body (31, 32) comprises glass fibers and/or carbon fibers, wherein in particular the glass fibers are aligned unidirectional or substantially unidirectional and/or the carbon fibers are aligned unidirectional or substantially unidirectional.

7. Spar cap (1) according to any of the preceding claims,
**characterized in that**,
a second stiffening body (31, 32), in particular a second separately formed stiffening body (31, 32), is arranged at the first end face (11) of the main body stack (10) at least at a first main body end (23a) of a third main body (23) of the plurality of main bodies (21, 22, 23, 24) and at least partially arranged at an upper side (24c) of a fourth main body (24) of the plurality of main bodies (21, 22, 23, 24) in a transition portion formed by the fourth main body (24), in order to carry at least partially longitudinal loads running at least in the longitudinal direction (LD) of the spar cap (1) and to transmit them to the main body stack (10).

8. Spar cap (1) according to any of the preceding claims,
**characterized in that**,
the spar cap (1) comprises, at a second end face (12) of the main body stack (10) opposite the first end face (11) of the main body stack (10), at least one further stiffening body (33) for at least partially carrying longitudinal loads running in the longitudinal direction (LD) of the spar cap (1), wherein the further stiffening body (33) is arranged at a second main body end (22b) of a main body (22) of two adjacent main bodies (22, 23) and at least partially at an upper side (23c) of a further main body (23) of these two main bodies (22, 23) in a transition section formed by the further main body (23) of the two main bodies (22, 23).

9. Spar cap (1) according to any of the preceding claims,
**characterized in that**,
the main bodies (21, 22, 23, 24) of the plurality of main bodies (21, 22, 23, 24) are arranged on top of each other in the stacking direction (SD) to form a main body stack (10) having a triangle-like cross section in longitudinal direction (LD) and/or a main body stack (10) comprising at least a lower main body (22, 23, 24) of the plurality of main bodies (21, 22, 23, 24) and an upper main body (21, 22, 23) of the plurality of main bodies (21, 22, 23, 24), wherein in the longitudinal direction (LD) of the spar cap (1), the lower main body (22, 23, 24) is longer than the upper main body (21, 22, 23).

10. Spar cap (1) according to any of the preceding claims,
**characterized in that**,
the spar cap (1) is produced as a component.

11. Wind turbine blade (200) for a wind turbine, the wind turbine blade (200) comprising at least one spar cap (1) according to any one of the preceding claims.

12. A method of manufacturing a spar cap (1) for a wind turbine blade (200), the method comprising:
- providing (410) a plurality of plate-shaped main bodies (21, 22, 23, 24),
- providing (421) a plurality of fiber layers or providing (422) at least a first stiffening body (31, 32),
- arranging (440) the main bodies (21, 22, 23, 24) one above the other in a stacking direction (SD) to form a main body stack (10), wherein at least a first main body end (21a) of a first main body (21) of the plurality of main bodies (21, 22, 23, 24) is arranged on a first end face (11) of the main body stack (10) offset in a longitudinal direction (LD) of the spar cap (1) to be manufactured with respect to a first main body end (22a) of a second main body (22) of the plurality of main bodies (21, 22, 23, 24) in such a way that a transition portion is formed by the second main body (22) between the first main body end (21a) of the first main body (21) and the first main body end (22a) of the second main body (22), and wherein the second main body (22) is arranged adjacent to the first main body (21),
- arranging (460) the plurality of fiber layers to the first main body end (21a) of the first main body (21) and at least partially at an upper side (22c) of the second main body (22) in a transition portion formed by the second main body (22), and laminating (461) at least the arranged plurality of fiber layers to the stiffening body (31, 32) to manufacture the spar cap (1)
or
arranging (462) the at least one first stiffening body (31, 32) at least at the first main body end (21a) of the first main body (21) and at least partially at an upper side (22c) of the second main body (22) in the transition portion formed by the second main body (22) to manufacture the spar cap (1).

13. Method according to claim 12,
**characterized in that**,
the main bodies (21, 22, 23, 24) are arranged in a materially bonded manner one above the other in the stacking direction (SD) to form the main body stack (10) and/or that the at least one first stiffening body (31, 32) is arranged in a materially bonded manner to the first main body end (21a) of the first main body (21) as well as in a materially bonded manner to the upper side (22c) of the second main body (22) in the transition portion formed by the second main body (22).

14. Method according to claim 12 or 13,
**characterized in that**,
the spar cap (1) is manufactured in a shell mold or a blade mold, wherein the blade mold is configured to manufacture a wind turbine blade (200) or a part thereof.

15. Method according to any of claim 12 - 14,
**characterized in that**,
a spar cap (1) according to any one of the claims 1 - 10 is manufactured.
